Europäisches Patentamt

European Patent Office

Office européen des brevets

(19)

(11) **EP 1 339 123 A2**

(12) **EUROPÄISCHE PATENTANMELDUNG**

(43) Veröffentlichungstag:
**27.08.2003 Patentblatt 2003/35**

(51) Int Cl.⁷: **H01M 8/02**, H01M 8/24

(21) Anmeldenummer: **03002441.8**

(22) Anmeldetag: **05.02.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO SI**

(30) Priorität: **23.02.2002 DE 10207909**

(71) Anmelder: **Behr GmbH & Co.**
**70469 Stuttgart (DE)**

(72) Erfinder:
• **Damsohn, Herbert, Dr.-Ing.**
**73773 Aichwald (DE)**
• **Heckenberger, Thomas, Dr.-Ing.**
**70771 Leinfelden-Echterdingen (DE)**
• **Kaiser, Wolfram**
**79848 Bonndorf (DE)**

(54) **Brennstoffzelle sowie Verfahren zur Herstellung**

(57)    Die Erfindung betrifft eine Brennstoffzelle (1) mit mindestens zwei Platten (2) und einer dazwischen angeordneten, für die Elektronenleitung isolierend wirkenden Folie (8), wobei die Platten (2) formschlüssig miteinander verbunden sind.

Fig. 4

EP 1 339 123 A2

## Beschreibung

Die Erfindung betrifft eine Brennstoffzelle gemäß dem Oberbegriff des Anspruches 1 sowie ein Verfahren zur Herstellung von Brennstoffzellen gemäß dem Oberbegriff des Anspruches 15.

Die Umwandlung von chemischer in elektrische Energie mittels Polymerelektrolyt-Brennstoffzellen stellt eine besonders effiziente und umweltfreundliche Methode zur Gewinnung von elektrischem Strom aus den Betriebsmedien Wasserstoff und Sauerstoff dar. Dabei finden zwei räumlich getrennte Elektrodenreaktionen statt, bei denen Elektronen freigesetzt bzw. gebunden werden:

$$H_2 => 2H^+ + 2e^- \qquad \text{(Anodische Reaktion)}$$

$$2H^+ + 2e^- + \tfrac{1}{2}\,O_2 => H_2O \qquad \text{(Kathodische Reaktion)}$$

Durch elektrische Verbindung der räumlich getrennten Reaktionszonen kann ein Teil der dabei umgesetzten Reaktionsenthalpie direkt als elektrischer Strom gewonnen werden.

Eine Polymerelektrolyt-Brennstoffzelle besteht im wesentlichen aus einer als Elektrolyt fungierenden Polymermembran, welche die Reaktanden Wasserstoff und Sauerstoff voneinander trennt und eine $H^+$-Protonenleitfähigkeit aufweist, sowie aus zwei mit Katalysatormaterial belegten Elektroden, die unter anderem zum Abgriff des von der Brennstoffzelle erzeugten elektrischen Stroms erforderlich sind. Elektroden und Polymermembran (im folgenden auch teilweise als Folie bezeichnet) werden gewöhnlich zu einer Membran-Elektroden-Anordnung (MEA) kompaktiert. Zur technischen Realisierung zweier durch den Elektrolyt voneinander getrennten, elektrisch über einen Außenleiter verbundenen Gasräume werden Bipolarplatten verwendet, die aus elektrisch leitfähigem Material bestehen und mit Gasverteilerstrukturen versehen sind, die den An- und Abtransport der Reaktionsedukte und Reaktionsprodukte ermöglichen. Somit besteht eine technische Brennstoff-Einzelzelle aus einer MEA, sowie zwei Bipolarplatten, die über Versorgungsanschlüsse mit den Betriebsmedien beaufschlagt und über die das Reaktionswasser abgeführt werden und die den beim Prozess auftretenden elektrischen Strom transportieren können.

Zur Abdichtung der Betriebsmedien, insbesondere von Brenn- und Oxidationsfluid gegeneinander, werden üblicherweise Dichtungen aus einem elastischen Kunststoff, beispielsweise einem Elastomer, eingesetzt.

Die DE 199 03 352 A1 offenbart eine weitere Möglichkeit der Abdichtung einer Polymerelektrolyt-Brennstoffzelle. Hierbei ist die Brennstoffzelle so ausgebildet, dass ein Zusammenbauen der Brennstoffzelle durch Ineinanderfügen der Ränder von Membran und Polplatten möglich ist. Dies ermöglicht eine formschlüssige Direktabdichtung durch Einklinken jeder der Bipolarplatten in einen speziell ausgebildeten MEA-Rand.

Derartige Abdichtungen haben den Nachteil, dass zusätzliche Teile in Form von Kunststoffdichtungen eingelegt bzw. an die MEA angespritzt werden müssen. Dies erhöht die Herstellungs- und Wartungskosten, falls der Austausch einzelnen Brennstoffzellen erforderlich ist.

Es ist Aufgabe der Erfindung, eine Brennstoffzelle mit einer verbesserten Dichtvorrichtung zur Verfügung zu stellen.

Diese Aufgabe wird gelöst durch eine Brennstoffzelle mit den Merkmalen des Anspruches 1 sowie durch ein Verfahren gemäß Anspruch 15. Vorteilhafte Ausgestaltungen sind Gegenstand der Unteransprüche.

Erfindungsgemäß wird eine Brennstoffzelle mit mindestens zwei Platten, insbesondere Bipolarplatten, und einer dazwischen angeordneten, insbesondere bei Polymerelektrolyt- oder Direktmethanol-Brennstoffzellen protonenleitenden, für die Elektronenleitung isolierend wirkenden Folie, insbesondere einer MEA, vorgesehen, bei der die Platten formschlüssig miteinander verbunden sind, wobei die formschlüssige Verbindung vorzugsweise in einem Randbereich der Platten angeordnet ist und durch einen Verformungsbereich gebildet wird. Bei den Platten handelt es sich vorzugsweise um Metall-, insbesondere Edelstahlbleche, die eine geeignete Struktur im Bereich des Dichtrandes aufweisen, wobei diese Struktur, bspw. eine Erhöhung oder Vertiefung, insbesondere vorgeprägt wird und die Platten ihre abschließende Form erst beim Zusammenbau der Brennstoffzelle im Rahmen eines Montagevorgangs durch plastische oder elastische Verformung erhalten. Hierbei bilden die Erhebungen oder Vertiefungen Dichtrand-Stege, welche mit hierzu korrespondierenden Dichtrand-Stegen im Randbereich der anderen Platte zusammenwirken.

Dabei kann eine erfindungsgemäße Einzel-Brennstoffzelle bei der Herstellung in einem kompakten Bauteil integriert werden, das sich im Falle eines Einzel-Brennstoffzellen-Defekts ohne großen Aufwand austauschen lässt, wodurch die Wartungsfreundlichkeit des Brennstoffzellensystems erheblich erhöht wird.

Um Dichtheit auf möglichst einfache Weise zu gewährleisten, ist zwischen den Platten im Verformungsbereich ein Dichtmittel angeordnet, wobei vorzugsweise das Dichtmittel durch die Folie, d.h. bei einer Polymerelektrolytoder Direktmethanol-Brennstoffzelle die Polymermembran der MEA, gebildet wird.

Im folgenden wird die Erfindung anhand zweier Ausführungsbeispiele mit einer Variante unter Bezugnahme auf die Zeichnung im einzelnen erläutert. In der Zeichnung zeigen:

Fig. 1A     eine schematische Schnittdarstellung einer Bipolarplatte im vorgeprägten Zustand gemäß dem ersten Ausführungsbeispiel,

Fig. 1 B     eine alternative Ausführungsform gemäß dem ersten Ausführungsbeispiel,

Fig. 1 C     die Schnittdarstellung von Fig. 1A im verpressten Zustand,

Fig. 1D     eine schematische Schnittdarstellung einer Bipolarplatte gemäß dem zweiten Ausführungsbeispiel im vorgeprägten Zustand,

Fig. 2     eine schematische Schnittdarstellung eines Einzel-Brennstoffzellenmoduls gemäß dem ersten, in Fig. 1A dargestellten Ausführungsbeispiel,

Fig. 3     eine schematische Schnittdarstellung gemäß dem ersten Ausführungsbeispiel mit einseitig vorverformter Bipolarplatte,

Fig. 4     eine schematisierte Explosionsdarstellung des Einzel-Brennstoffzellenmoduls gemäß dem ersten Ausführungsbeispiel nach dem Verpressen,

Fig. 5     eine schematische Draufsicht auf aneinander anliegende Flächen zweier Bipolarplatten gemäß dem ersten Ausführungsbeispiel,

Fig. 6A     eine schematische Schnittdarstellung des erfindungsgemäßen, dem Prinzip von Fig. 1D entsprechenden Dichtrandes vor der Verformung ohne Darstellung der MEA, und

Fig. 6B     eine Fig. 6A entsprechende Schnittdarstellung nach dem Verpressen.

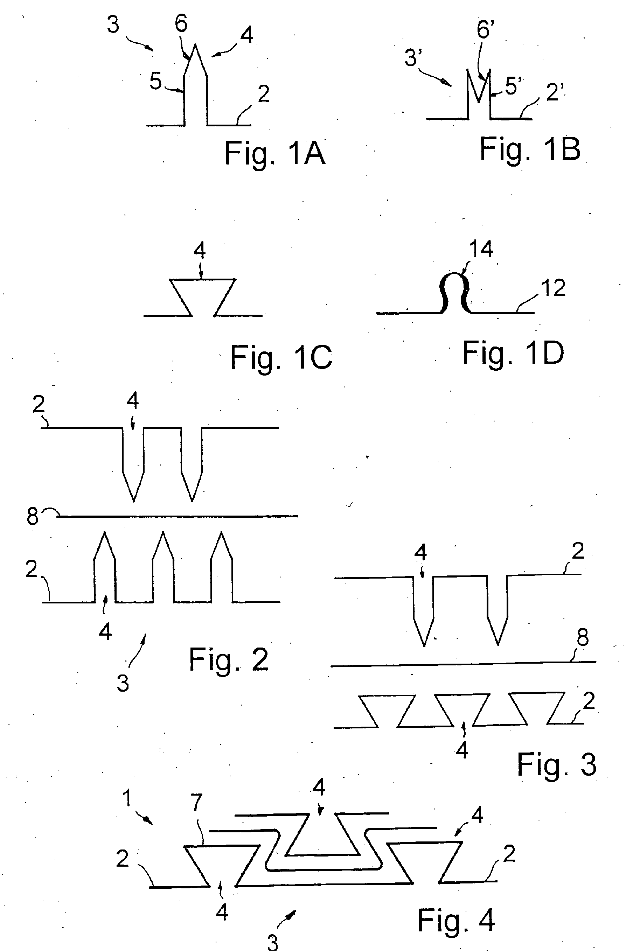

Ein erfindungsgemäßes Einzel-Brennstoffzellenmodul 1, wie es in Fig. 4 schematisch dargestellt ist, weist zwei, in einem Prägeverfahren hergestellte Metall-Bipolarplatten 2, bspw. aus Aluminium, auf, deren Rand, im folgenden als Dichtrand 3 bezeichnet, bei der Herstellung bereichsweise derart umgeformt wurde, dass sie zwei bzw. drei Verformungsbereiche 4 aufweisen, welche jeweils einen äußeren Bereich 5 mit etwa parallel verlaufenden Seiten und einen hieran in einem stumpfen Winkel anschließenden inneren Bereich 6 mit aufeinander zulaufenden Seiten zeigen (vgl. Fig. 1A und 2). Die beiden Bereiche 5 und 6 werden im folgenden als Dichtrand-Steg 7 bezeichnet. Zwischen den beiden Bipolarplatten 2 ist eine MEA 8 eingelegt. Hierbei ist der äußere Bereich der MEA 8, welcher im zusammengebauten Zustand benachbart zum Dichtrand 3 der Bipolarplatten 2 angeordnet ist, nicht mit einem Katalysator oder einer Gasdiffusionselektrode belegt und weist lediglich die Elektrolyt-Folie, bspw. aus Nafion® 113.5, auf. Entsprechend zum Einzel-Brennstoffzellenmodul 1 kann auch eine Einzel-Brennstoffzelle aufgebaut sein.

Bei der Montage erfolgt ein Umformvorgang (Verpressen), während dem eine plastische Verformung der Dichtrand-Stege 7 der Bipolarplatten 2 erfolgt, so dass nach erfolgtem Verpressen eine praktisch spaltfreie, dichte Verbindung beider Bipolarplatten 2 unter Zwischenlage der MEA 8 vorliegt. Hierbei nehmen die Bereiche 5 und 6 der Dichtrand-Stege 7 jeweils eine im Querschnitt schwalbenschwanzartige Form an (vgl. Fig. 3 und insbesondere Fig. 4), so dass eine unlösbare Verbindung beider Bipolarplatten 2 erfolgt, wobei die Polymermembran der MEA 8 oder eher deren Randbereich, d.h. äußere Bereich der Folie, als Dichtmittel 9 dient.

Gemäß einer Variante kann eine oder beide Bipolarplatten 2' entsprechend Fig. 1B vorgeprägt sein, d.h. einen Dichtrand 3' mit einem äußeren Bereich 5', der dem vorstehend beschriebenen äußeren Bereich 5 entspricht, und einem hieran in einem überstumpfen Winkel anschließenden inneren Bereich 6' mit aufeinander zulaufenden Seiten versehen sein. Auch in diesem Fall ergibt sich nach der Ausprägung eine im Querschnitt schwalbenschwanzartige Form, wie in Fig. 4 dargestellt.

Gemäß einer weiteren Variante kann eine der beiden Bipolarplatten 2 oder 2' bereits entsprechend Fig. 1C vorverformt sein, so dass diese Bipolarplatte 2 bzw. 2' bei der Montage nicht oder nur noch unwesentlich verformt wird.

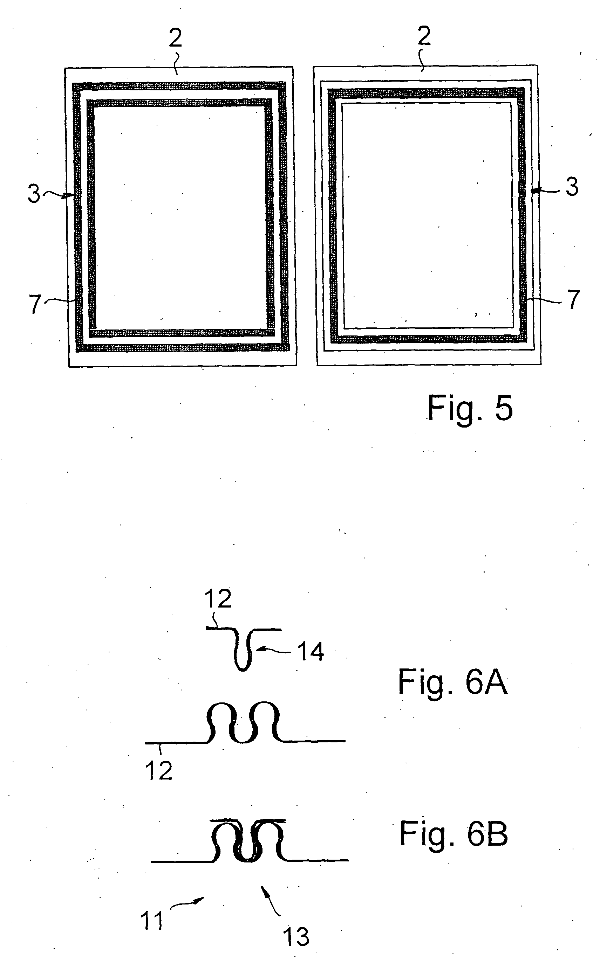

Gemäß einem zweiten Ausführungsbeispiel, welches im wesentlichen dem ersten Ausführungsbeispiel entspricht, weshalb gleiche oder gleichwirkende Elemente mit um 10 erhöhten Bezugszeichen bezeichnet sind, sind beide Bipolarplatten 12 einer Einzel-Brennstoffzelle 11 mit einem im Randbereich der Bipolarplatten 12 vorgesehenen, als Dichtrand 13 bezeichneten, vorgeformten Verformungsbereich 14 von $\Omega$-artiger Gestalt versehen (vgl. Fig. 1D), wobei an der anodenseitigen Bipolarplatte 12 ein Dichtrand-Steg und an der kathodenseitigen Bipolarplatte 12 zwei parallel zueinander verlaufende Dichtrand-Stege vorgesehen sind (vgl. Fig. 6A).

Zwischen den Bipolarplatten 12 ist eine MEA eingelegt (nicht dargestellt), wobei diese MEA im Bereich des Dichtrandes 13 nicht mit einem Katalysator oder einer Gasdiffusionselektrode belegt ist und lediglich die mit einer weiteren Kunststoff-Folie verstärkte Elektrolyt-Folie, bspw. aus Nafion® 113.5, aufweist.

Für die Montage werden die beiden Bipolarplatten 12 unter Zwischenlage der MEA aufeinander positioniert und miteinander verpresst, so dass die jeweilige $\Omega$-Struktur in die entsprechende Hinterschneidung der Gegenseite unter Einbeziehung des Randbereichs der MEA gelangt und eine selbstsichernde, formschlüssige und dichte Verbindung gewährleistet, wobei die abdichtende Funktion von der Elektrolyt-Folie bzw. der Kunststoff-Folie unterstützt wird.

Die Verformung bei der Montage kann dabei auf plastische oder elastische Weise erfolgen, wobei der Formschluss durch die Wahl einer geeigneten Geometrie "ineinanderschnappender" Dichtrand-Stege und einer daraus resultierenden Vorspannung erzielt oder verstärkt wrid.

Alternativ zu den oben beschriebenen Geometrien sind auch andere Geometrien möglich, die im Endzustand, d.h. nach der Verformung zu der o.g. formschlüssigen Verbindung führen und entsprechend abdichten.

**Bezugszeichenliste**

| | |
|---|---|
| 1 | Einzel-Brennstoffzellenmodul |
| 2, 2' | Bipolarplatte |
| 3, 3' | Dichtrand |
| 4 | Verformungsbereich |
| 5, 5' | äußerer Bereich |
| 6, 6' | innerer Bereich |
| 7 | Dichtrand-Steg |
| 8 | MEA |
| 9 | Dichtmittel |
| 11 | Einzel-Brennstoffzelle |
| 12 | Bipolarplatte |
| 13 | Dichtrand |
| 14 | Verformungsbereich |

**Patentansprüche**

1. Brennstoffzelle mit mindestens zwei Platten (2; 2'; 12) und einer dazwischen angeordneten, für die Elektronenleitung isolierend wirkenden Folie (8), **dadurch gekennzeichnet, dass** die Platten (2; 2'; 12) formschlüssig miteinander verbunden sind.

2. Brennstoffzelle nach Anspruch 1, **dadurch gekennzeichnet, dass** die formschlüssige Verbindung in einem Randbereich der Platten (2; 2'; 12) vorgesehen ist.

3. Brennstoffzelle nach einem der vorhergehenden Ansprüche, **dadurch gekennzeichnet, dass** die Platten (2; 2'; 12) im Randbereich Verformungsbereiche (4; 14) aufweisen.

4. Brennstoffzelle nach einem der vorhergehenden Ansprüche, **dadurch gekennzeichnet, dass** zwischen den Platten (2; 2'; 12) ein Dichtmittel (9) angeordnet ist.

5. Brennstoffzelle nach einem der vorhergehenden Ansprüche, **dadurch gekennzeichnet, dass** die formschlüssige Verbindung der Platten (2; 2'; 12) die Folie (8) mit einbezieht.

6. Brennstoffzelle nach den Ansprüchen 4 und 5, **dadurch gekennzeichnet, dass** die Folie (8) das Dichtmittel (9) bildet.

7. Brennstoffzelle nach einem der vorhergehenden Ansprüche, **dadurch gekennzeichnet, dass** die eine Platte (2; 2'; 12) im Randbereich eine oder mehrere, im wesentlichen parallel zum Rand verlaufende Dichtrand-Stege (7) aufweist, welche mit hierzu korrespondierenden Dichtrand-Stegen (7) im Randbereich der anderen Platte (2; 2'; 12) zusammenwirkt.

8. Brennstoffzelle nach Anspruch 7, **dadurch gekennzeichnet, dass** der Dichtrand-Steg (7) einen äußeren Bereich (5) mit im wesentlichen parallel verlaufenden Seiten und einen hieran in einem stumpfen Winkel anschließenden inneren Bereich (6) mit aufeinander zulaufenden Seiten aufweist.

9. Brennstoffzelle nach Anspruch 7, **dadurch gekennzeichnet, dass** der Dichtrand-Steg einen äußeren Bereich (5') mit im wesentlichen parallel verlaufenden Seiten und einen hieran in einem überstumpfen Winkel anschließenden inneren Bereich (6') mit aufeinander zulaufenden Seiten aufweist.

10. Brennstoffzelle nach Anspruch 7, **dadurch gekennzeichnet, dass** der Dichtrand-Steg im Querschnitt eine Ω-artige Gestalt aufweist.

11. Brennstoffzelle nach einem der Ansprüche 8 oder 9, **dadurch gekennzeichnet, dass** die formschlüssige Verbindung einen schwalbenschwanzartigen Querschnitt aufweist.

12. Brennstoffzelle nach einem der vorhergehenden Ansprüche, **dadurch gekennzeichnet, dass** die Folie (8) verstärkt ist.

13. Brennstoffzelle nach einem der vorhergehenden Ansprüche, **dadurch gekennzeichnet, dass** die formschlüssige Verbindung unlösbar ist.

14. Brennstoffzellenstapel, bestehend aus mindestens einer Brennstoffzelle (1) gemäß einem der vorstehenden Ansprüche.

15. Verfahren zur Herstellung einer Brennstoffzelle, welche zumindest zwei Platten (2; 2'; 12) und eine dazwischen angeordnete, für die Elektronenleitung isolierend wirkende Folie (8) aufweist, **dadurch gekennzeichnet, dass** die Platten (2; 2'; 12) vorgeformt und nach dem Positionieren formschlüssig miteinander verbunden werden.

16. Verfahren nach Anspruch 15, **dadurch gekennzeichnet, dass** mindestens eine der Platten (2; 2'; 12) elastisch verformt wird.

17. Verfahren nach Anspruch 15 oder 16, **dadurch gekennzeichnet, dass** mindestens eine der Platten (2; 2'; 12) plastisch verformt wird.

18. Verfahren nach einem der Ansprüche 15 bis 17, **dadurch gekennzeichnet, dass** die Verformung im Randbereich erfolgt, wobei durch die Verformung zumindest eine Hinterschneidung einer Platte (2; 2'; 12) in Hinblick auf die zweite Platte (2; 2'; 12) bewirkt wird.

Fig. 1A

Fig. 1B

Fig. 1C

Fig. 1D

Fig. 2

Fig. 3

Fig. 4

Fig. 5

Fig. 6A

Fig. 6B